Europäisches Patentamt

European Patent Office

Office européen des brevets

(11) Publication number: **0 509 472 A2**

## EUROPEAN PATENT APPLICATION

(21) Application number: **92106488.7**

(22) Date of filing: **15.04.92**

(51) Int. Cl.5: **G11B 7/26**

(30) Priority: **18.04.91 US 687059**

(43) Date of publication of application:
**21.10.92 Bulletin 92/43**

(84) Designated Contracting States:
**DE FR GB IT**

(71) Applicant: **E.I. DU PONT DE NEMOURS AND COMPANY**
**1007 Market Street**
**Wilmington Delaware 19898(US)**

(72) Inventor: **Shvartsman, Felix P.**
**2201 Valley Avenue**
**Wilmington, Delaware 19810(US)**

(74) Representative: **von Kreisler, Alek, Dipl.-Chem. et al**
**Patentanwälte Von Kreisler-Selting-Werner, Deichmannhaus am Hauptbahnhof**
**W-5000 Köln 1(DE)**

(54) **Method for making read-only optically readable media.**

(57) A method for making read-only optical recording media having an information layer which is comprised of a photohardened refractive index-modulatory polymer. The refractive index-modulatory polymer is imaged by intimately contacting the photosensitive polymer layer with a relief image photomask-master and passing actinic radiation through the photomask-master to harden the exposed areas of the polymer. The imaged polymer layer is then flood exposed to fix the refractive index image within the polymer layer.

EP 0 509 472 A2

Cross-Reference to Related Application

This is a continuation-in-part of copending U.S. Patent Application S.N. 07/375,100 filed June 30, 1989.

Field of Invention

The invention is directed to a method for making read-only optically readable media using a layer of refractive-index-modulatorypolymer as the information-containing component.

Background of the Invention

In response to the demand for more reliable and higher capacity data storage and retrieval systems, there has been considerable development of optical recording systems. The desired properties of optical recording systems or media are (1) high sensitivity, (2) high signal-to-noise ratio (SNR), (3) high tolerance to material variation, contaminants and other defects, and (4) high archival stability after extended storage and/or recording and readout (See Bartolini, J. Vac. Sci. Technology, Vol. 18, No. 1, January/February 1981, p. 70). Based upon these criteria, a considerable amount of research has been and continues to be carried out directed to obtaining the best possible media materials.

Some of these systems utilize a highly focused modulated beam of light, such as a laser beam, which is directed onto a recording layer which is capable of absorbing a substantial amount of light. The heat produced by the beam causes the light-absorbing material in the area struck by the highly focused beam to change chemically and/or physically, thus producing a concomitant change in optical properties, e.g., transmissivity or reflectivity, in the affected area. For readout, the contrast between the amount of light transmitted or reflected from the unaffected parts of the absorbing layer and from the marked areas of the layer is measured. Examples of such recording systems are disclosed in U.S. patents throughout the literature and in numerous U.S. patents such as U.S. Patent Nos. 3,314,073 and 3,474,457. The simplest optical disk medium consists merely of a dimensionally stable solid substrate on which is coated a thin layer of light-absorptive material such as a metal layer. When the light-absorptive layer is struck by an intense beam of coherent light, such as from a laser source, the light-absorptive material is either vaporized and/or thermally degraded, thereby producing a very small marked area which exhibits different transmissivity or reflectivity than the adjacent unmarked layer. A more advanced laser recording medium is disclosed in Nam, U.S. Patent 4,410,581 in which a single recording layer is completely encapsulated between an intermediate layer of solvent-resistant plastic material formed on a transparent substrate and a protective solvent-based plastic layer formed on the recording layer. In this instance, the encapsulated recording layer is imaged by a laser beam passing through the transparent substrate to burn a very small hole in the layer.

Some other systems based on magneto-optical phenomena utilize the Kerr effect to turn the angle of collimated and polarized light on localized areas, wherein a magnetic field has a direction opposite to that of the background. Examples of different magneto-optical systems are described in U.S. Patents 3,224,333, 3,472,575, 4,670,316, 4,684,454, and 4,693,943, among others.

Still another category of systems is based on photographic techniques with preference to positive-working dye bleach and diazo systems in which an exposed molecule becomes chemically inert and transparent to further irradiation. These systems may be replicated by contact printing, as described by the article "Replication of Very High-Density Video Disk Master Recordings Via Contact Printing", by D. G. Howe et al., pp. 370-374, Volume 3, Number 6, November/December 1979.

Regardless of which method is selected to make a single system or medium such as a compact disc, replication of a master piece to reproduce devices in an accurate manner has been complicated and expensive.

An attempt is being made in the aforementioned article, as well as in U.S. Patent 4,201,581, among others, to reduce the complexity of the replication process without success.

U.S. Patent 4,201,581, Thomas et al., issued on May 6, 1980, discloses a method of contact printing, wherein certain steps of previous processes, such as application of vacuum or pressure are replaced by introduction of a thin layer of liquid between the master device and the replicate device. More particularly there is provided a method for obtaining close contact between a master device and a replicate device, even over relatively large areas, without applying mechanical pressure or using a vacuum pump to remove air from between the master and replicate devices. According to a preferred embodiment, a master device and a replicate device are superposed with a liquid therebetween to form a master-replicate combination. The master-replicate combination is then spun causing the liquid to form a thin layer between the master and replicate devices. A vacuum effect results which maintains the master and replicate devices in close contact.

Although the complications brought about by the vacuum, pressure, or other similar steps are negated in the disclosure of U.S. Patent 4,201,581, the additional step of introducing a thin liquid layer between the master and the replicate devices, complicates the process, since the liquid has to be applied initially in excess and then the excess liquid has to be removed by such means as spinning. Thus, the solution of one problem creates a new one.

The present invention is intended to alleviate these problems and to provide an effective and inexpensive method for replicating optical media.

## Prior Art

In U.S. Patent 4,296,158, cures of polyacrylate monomers and heterocyclic group-containing oligomers with terminal unsaturation are spread over a stamper and simultaneously covered with a polymeric film by means of a pressure roll. The film becomes the disc substrate.

In U.S. Patent 4,354,988 a process is described that produces optical discs by combining the steps of spreading photocurable resin on a stamper, covering with substrate film, curing, punching a center hole and trimming, all in a continuous sequence.

U.S. Patent 4,482,511 discloses a similar approach using radiation-sensitive liquid compositions comprised of monomers, oligomers or mixtures thereof. Pressures of less than 1 kg/cm$^2$ are needed and high fidelity glass master originals can be used. Means for applying a thin fluoropolymer release layer to the stamper surface is also disclosed.

In U.S. Patent 4,510,593, polymerizable mixtures of mono- and polyunsaturated monomers also containing soluble film-forming polymer binders are described which are applied to a substrate then contacted with a flexible stamper by means of a pressure roll. The presence of the binder is stated to improve the properties oft he information-carrying layer. In U.S. Patent 4,430,363, a screen printing method for applying similar radiation sensitive mixtures to the substrate is described. In both of these patents, curing is achieved by exposure through an actinic radiation-transparent stamper.

In U.S. Patent 4,582,885, a fluid, polymerizable oligomer composition containing "hard" and "soft" segments that can be varied to control end-use physical properties is used to prepare a variety of information-carrying articles, including optical discs.

While the liquid compositions described in the above patents and technical article may be fluid enough to conform to the information-carrying stamper relief pattern at room temperature under application pressures much lower than required for compression molding, they nevertheless have certain inherently practical limitations: (1) fluid compositions require a precision mold to contain the liquid; and (2) careful control of the amount of liquid charged during each cycle is required to maintain uniformity of thickness and other critical disc dimensions.

On the other hand, U.S. 4,790,893 to Watkins discloses a process for making information carriers such as CDs in which a thermoplastic material layer is extruded at a temperature above its softening point onto a patterned metal master. Pressure is applied to the layer which is cooled and the cooled layer is separated from the metal master. A thin metal film is applied of the patterned layer and the patterned layer is laminated to a substrate.

In prior art elements where the photocurable composition is applied as a layer on a substrate, either before being impressed by the stamper, or if applied to the stamper then contacted by the substrate, careful attention must be paid to the radiation curing step to assure adequate substrate adhesion. Overcuring can lead to excess information layer shrinkage, variable information distorting internal stress or unproductive long exposure times. The alternative would be severe restrictions on the selection of acceptable compatible combinations of substrates and curable compositions.

## Brief Summary of the Invention

The invention is directed generally to a unique method for making read-only optical recording media, the basic structure of which is comprised of (1) a dimensionally stable transparent substrate having laminated thereto (2) an information layer which is comprised of a photohardened refractive index-modulatory polymer, (3) a reflective layer overlying the surface of the information layer, and (4) a protective layer overlying the information layer. In view of the structure of such optically readable media, the method of the invention can be carried out in different ways using a variety of basic steps and sequences.

Therefore, in a first aspect, the invention is directed to a method for making a read-only optical

3

recording media comprising the steps of:

(1) Forming a reflective layer on a surface of a protective support film;

(2) Laminating a refractive index-modulatory photosensitive dry film to the reflective layer side of the protective support film;

(3) Contacting the surface of the photosensitive dry film with a relief image photomask-master having recessed and protruding areas which contrast in opacity and transparency and represent optically readable information, thereby conforming the exposed surface of the photosensitive dry film with the surface of the relief image photomask-master;

(4) Passing actinic radiation through the transparent areas of the photomask-master thereby hardening and effecting a change of at least 0.01 in the refractive index of the exposed areas of the photosensitive dry film;

(5) Removing the photomask-master from the conforming surface of the photosensitive dry film;

(6) Flood exposing the imaged photosensitive dry film with actinic radiation to effect hardening of the previously unexposed areas thereof;

(7) Applying a layer of photohardenable optical adhesive to either the surface of the photohardened dry film or a dimensionally stable transparent substrate;

(8) Laminating the available surface of the photohardened dry film to the substrate with the optical adhesive sandwiched between the layers; and

(9) Curing the optical adhesive.

In a second aspect the invention is directed to a method for making a read-only recording medium comprising the steps of:

(1) Laminating a refractive index-modulatory photosensitive dry film to a dimensionally stable transparent substrate;

(2) Contacting the surface of the photosensitive dry film with a relief image photomask-master having recessed and protruding areas which contrast in opacity and transparency and represent optically readable information, thereby conforming the exposed surface of the photosensitive dry film with the surface of the relief image photomask-master;

(3) Passing actinic radiation through the transparent areas of the photomask thereby hardening and effecting a change of at least 0.01 in the refractive index of the exposed areas of the photosensitive dry film;

(4) Removing the photomask from the surface of the imaged photohardened dry film;

(5) Flood exposing the photosensitive dry film with actinic radiation to effect hardening of the previously unexposed areas thereof;

(6) Forming a reflective layer on the surface of the imaged photohardened dry film; and

(7) Applying a layer of curable adhesive to either the reflective layer or to a surface of a protective support film;

(8) Laminating the reflective layer to the protective support film with the curable adhesive sandwiched between the layers; and

(9) Curing the adhesive.

## Brief Description of the Drawing

The Drawing consists of five figures as follows:

Figure 1 is a schematic representation of a photomask and a layer of photohardenable refractive index-modulatory polymer;

Figure 2 is a schematic representation of the closely conforming relationship between photomask and refractive index-modulatory polymer during an embossing operation in accordance with the invention;

Figure 3 is a schematic representation of the relationship between photomask and refractive index-modulatory polymer during an embossing operation in which the polymer does not conform sufficiently with the photomask;

Figure 4 is a schematic representation of the patterned exposure step of the method of the invention;

Figure 5 is a schematic representation of a read-only optical recording medium made by the method of the invention showing the manner in which the recorded information is read by means of a laser beam;

Figure 6 is a representation of the multistep method of the invention showing schematically the major equipment involved in the method; and

Figure 7a through d are schematic representations of an optical element as it proceeds though the various steps of the invention.

4

### Detailed Description of the Invention

### A. Substrate

The substrate functions primarily as a dimensionally stable support for the photohardened information-carrying layer. It may be either rigid or flexible. To function as a suitable substrate, the disc or sheet should (1) be substantially transparent to radiation of the scanner system, (2) be uniformly thick across the entire surface area, birefringence, (3) have a refractive index matched to the photohardened layer, and (4) have a geometry suitable for the end use contemplated.

The blank substrate can be formulated from a variety of polymeric materials provided that suitable optical criteria are met. Typical of such polymeric materials are poly(methyl methacrylates), polycarbonates and the like. Of these, polycarbonates are preferred due to their better dimensional stability during environmental changes. In some instances, glass, quartz or other transparent inorganic materials may be used as the substrate. Typically, polymeric materials are preferred due to their low cost and the ease of manufacturing discs therefrom.

Blank disk substrates may be formed by conventional molding methods, such as injection molding or injection/compression molding methods, or they may be cut or stamped from preformed sheets of the substrate material. In one embodiment of this invention the geometry of the substrate is formed before lamination of the photohardenable layer. In an alternative embodiment, the geometry of the substrate is cut or stamped from sheets of substrate material after the photohardenable layer has been laminated thereto. In the alternative embodiment, It is possible to carry out all the manufacturing steps before cutting or stamping the disc from the processed sheet laminate.

Though the emphasis in this application is upon disc-shaped media which are read during rotation beneath a fixed laser read-beam, it will be apparent to those skilled in the art that the invention is also useful for other media configurations, including those which are read in a fixed position by a scanning layer read-beam.

### B. Refractive Index-Modulatory Photosensitive Layer

As used herein, the term "refractive index-modulatory photosensitive layer" means a substantially solvent-free photosensitive solid organic polymeric layer which, upon exposure to actinic radiation, undergoes both hardening and a refractive index change of at least 0.01 and preferably 0.05-0.07. The essential components of this layer are:

(a) thermoplastic solid polymeric binder,

(b) liquid ethylenically unsaturated monomer which has a boiling point above $100°C$ and is capable of addition polymerization, and

(c) a photoinitiator system that activates polymerization of the unsaturated monomer upon exposure to actinic radiation.

Refractive index-modulatory photosensitive dry layers of the type which are suitable for use in the invention are widely known in the prior art. However, particularly preferred refractive index-modulatory photosensitive dry film materials are those disclosed in U.S. 3,658,526 to Haugh, U.S. 4,942,102 to Keys and U.S. 4,942,112 to Monroe et al. It will be recognized by those skilled in the photopolymer arts that the hardening of such materials upon exposure to actinic radiation may be by the mechanism of addition polymerization, crosslinking between polymer chains or both. They are applied to the substrate by such means as casting or spin coating a solvent dispersion of the material.

As will be explained in detail hereinbelow, the refractive index-modulatory photosensitive layers to be used in the invention must contain at least one each of a liquid unsaturated monomer and a solid polymeric binder. They may, however, contain more than one monomer and/or more than one binder component so long as the essential liquid monomer and solid binder components are both present. For example, the binder component may be comprised of a single solid binder polymer or it maybe a mixture of solid and liquid binders or a mixture of different solid binders. Likewise, the monomer component may be comprised of a single liquid monomer or it may be a mixture of solid and liquid monomers or a mixture of different liquid monomers.

The refractive indices (RI) of the monomer and binder may vary widely. For example, the layer may be comprised of low RI monomer and low RI binder as in the above-referred Haugh patent. On the other hand, the layer may be comprised of low RI monomer and high RI binder or high RI monomer and low RI binder as disclosed in the Keys and Monroe patents. In any event, it is essential that upon photohardening the layer undergo an RI shift of at least 0.01 and preferably 0.05-0.07. Refractive index shift is determined with 632.8 nm radiation from a transmission grating having a spatial frequency of about 1000 lines per millimeter by the procedure set out in U.S. 4,942,112 at Column 6, line 33 through Column 7, line 54.

Though the precise mechanism by which the photosensitive layers are effective in the invention is not fully understood, it is believed that the RI differences which are essential to the operability of the invention are the result of "internal mass transport" which takes place during the initial exposure of the film to actinic radiation and creates compositional gradients between the exposed and unexposed areas of the dry film layer. In particular, it is believed that during the initial imaging step, monomer diffuses form the regions which are not lightstruck into the lightstruck regions where polymerization and/or crosslinking is taking place. This diffusion of monomer creates a marked compositional gradient between the exposed and unexposed areas of the film which become fixed upon flood exposure. These areas are then permanently detectable by their difference in RI. This mechanism is discussed more fully in Wopschall et al., Appl. Opt. 11,2096 (1972), Tomlinson et al. in Adv. in Photochem., Vol. 12, J. N. Pitts et al., eds., Wiley-Interscience, New York, 1980, pp. 201-281 and in B. M. Monroe, J. Imag. Sci., in press.

As used herein, the term "dry photohardenable film" or "dry photohardenable layer" refers to a substantially solvent-free polymeric layer having a creep viscosity of about 20 megapoises or greater and preferably between about 100 and 200 megapoises, as measured with a parallel plate rheometer. Such "dry photohardenable layers" are contrasted with conventional liquid photohardenable layers which typically have viscosities of about several hundred poises or less. For the purpose of this invention, viscosity is measured as creep viscosity with a parallel plate rheometer using a Du Pont Model 1090 thermal Mechanical Analyzer. In this procedure, a 0.036 inch thick sample is placed in contact between two flat discs (about 0.25 inch diameter). A quartz probe which is capable of accepting additional weights is positioned atop the upper disc and the same/disc assembly is maintained at constant temperature of 40C and RH of 44% throughout the measurement. Creep viscosily is calculated from the rate of decrease of sample thickness under equilibrated conditions. The 0.036 inch sample is prepared by laminating together sufficient layers of the test film to obtain the desired thickness.

C. Reflective Layer and Protective Support Film

In order for an embossed information track to be useful in conventional laser beam playback systems, incident playback radiation must be reflected from portions of the relief track back into the detector. This is accomplished by applying a layer of reflective material, usually a metal or reflective dye, adjacent to the embossed information-carrying surface.

In media configurations where the information layer is supported by a transparent substrate before embossing,the reflective layer is applied directly to the information layer either before or after embossing. However, where the reflective layer is not applied to a substrate before embossing. The reflective layer is applied to an ancillary layer which serves both as a protective layer and as a support for the reflective layer.

The ancillary protective layer can be made of any environmentally and dimensionally stable material such as polyethylene, polypropylene, ethylene-propylene copolymer, polyesters such as PET, polyimides and the like. Mylar® polyester film is preferred.

The reflective coating is applied to the protective layer support by conventional means. For example, a metallic reflective layer can be applied by evaporation of a metal such as Al, Cu and Ag, onto the surface of the layer. A reflective layer of silver can, for example, be deposited by electroless methods such as those disclosed in "The Technology of Aerosol Plate" by Donald T. Levy In Technical Proceedings 51st Annual Convention American Electroplater's Society, June, 1964, pp. 139-149 and In U.S. 4,639,382. A reflective dye layer may be applied from a solution using conventional coating techniques such as spin coating. Other such techniques will be known to those skilled in the coating arts.

D. Lamination

The photohardenable layer can be laminated to the reflective layer or to the surface of the substrate using any conventional laminating system. Suitable systems for applying a dry film to a substrate include hot roll laminators or laminators with a heated platen or shoe as disclosed In U.S. Patent 3,469,982; U.S. 3,547,730; U.S. 3,649,268 and U.S. 4,127,436 each of which is incorporated herein by reference. useful laminating systems wherein a liquid is used to enhance adhesion include those disclosed in U.S. 3,629,036; U.S. 4,069,076; U.S. 4,405,394 and U.S. 4,378,264 each of which is incorporated herein by reference. Particularly useful are commercial hot roll laminators, e.g., Du Pont Cromalin® Laminator and Du Pont Riston® Hot Roll Laminator and Laminator, Model 100.

In the laminating step of this invention the protective cover sheet or interleaf, if present, is first removed from the photohardenable layer and the layer is applied to the surface of the substrate under pressure and typically with heat so that interfacial air is removed and void free adhesion between the substrate and the layer is effected. Preferably a hot roll laminator is used to effect such void free adhesion.

In those instances where a preformed substrate is used, e.g., a blank disc, a carrier sheet may be used to carry each preformed substrate or an array of substrates into and through the nip of the laminator to prevent contamination of the rear surface of each substrate. ordinary paper sheets or webs are suitable as a carrier sheet provided they are lint free and likewise free of contaminants. A suitable carrier sheet is Cromalin® Masterproof Commercial Receptor, Du Pont product CM/CR or other like material. Also in those instances where preformed substrates are used excess areas of the photohardenable element are cut from the edges of the laminated substrate, e.g., from the edges and hole of a laminated preformed disc. In those instances where the adhesive/cohesive forces are carefully balanced, trimming of excess photohardenable material from the laminate may be effected by peeling the support sheet therefrom with excess material adhering thereto.

E. Conforming

After removing the temporary support the surface of the photohardenable layer is conformed with an information track by pressure at room temperature a photomask-master bearing on Its surface the negative of the information track in the form of lands and pits.

While simple hand pressure is sufficient to embed the photomask-master surface into the photohardenable layer, use of a press is preferred where uniform high pressure across the surface can be applied momentarily to insure complete conformity of the layer surface to the photomask-master surface. Similarly, the photomask-master can be uniformly embedded into the photohardenable layer by passing the aligned laminate/photomask through the nip of a pressure roll laminator, followed by the use of a press. Alter the image of the photomask-master has been uniformly embedded in the photohardenable layer, pressure may be relaxed or removed and the photohardenable layer then exposed to actinic radiation passing through the transparent substrate. Alternatively, pressure may be maintained during actinic exposure.

It is to be noted that the process of conforming the photohardenable layer with the photomask-master can be considered an embossing process to the extent that "bosses" or protrusions are formed in the film by the conforming operation. The surface relief aspects of the photohardened layer are of no significance because the optical properties of the products of the invention are derived from the RI properties of the dry film, not from the three dimensional configuration of the conformed layer.

As used herein, the term "photomask-master" refers to a high resolution photomask having a conventional opaque metal layer, e.g., chromium, supported on a substrate such as glass or quartz. This master is prepared in a conventional manner by using positive-acting electron beam resist materials, etc. as described in Bowden, et al., J. Electrochem. Soc., Solid-State Science & Technology, Vol.. 128, No. 6, pp. 1304-1313.

F. Curable Adhesive

Because of the limited adhesion properties of some polymer layers, it may in the practice of the invention be preferred to interpose a layer of curable adhesive between such a polymer layer and the adjacent substrate. For example, in the practice of the invention as set out in Claim 1, it is preferred to interpose a curable adhesive between the photohardened active layer and the adjacent substrate. In this instance, it is essential that the adhesive possess good optical properties so that it does not interfere with the passage of light from the substrate to the active layer.

Such optical adhesives are usually optically clear, solvent-free, viscous liquid polymers of various kinds, including photosensitive polymers such as acrylates and methacrylates similar to those used in the photopolymer layers of the invention. One-part adhesives are therefore preferred which upon exposure to ultraviolet light thicken in seconds and cure in minutes.

Examples of suitable optical adhesives are those manufactured by Norland Products, Inc., New Brunswick, NJ under the tradename of Norland Optical Adhesives. These adhesives meet Federal Specification MIL-A-3902C. After application to the surface to be bonded, they are cured in two steps: (1) a short precure with ultraviolet light of sufficient duration to set the bond; and (2) a longer ultraviolet light cure to obtain full crosslinking and solvent resistance in the adhesive. The Norland Optical Adhesives have viscosities ranging from 300 to 5000 cps. On the other hand, when the adhesive is used between the reflective and protective layers as in the method of claim 2, it is not essential that it have any special optical properties. In both instances, it is, of course, essential that the adhesive have good permanent bonding properties to both of the bonded layers.

Description of the Drawing

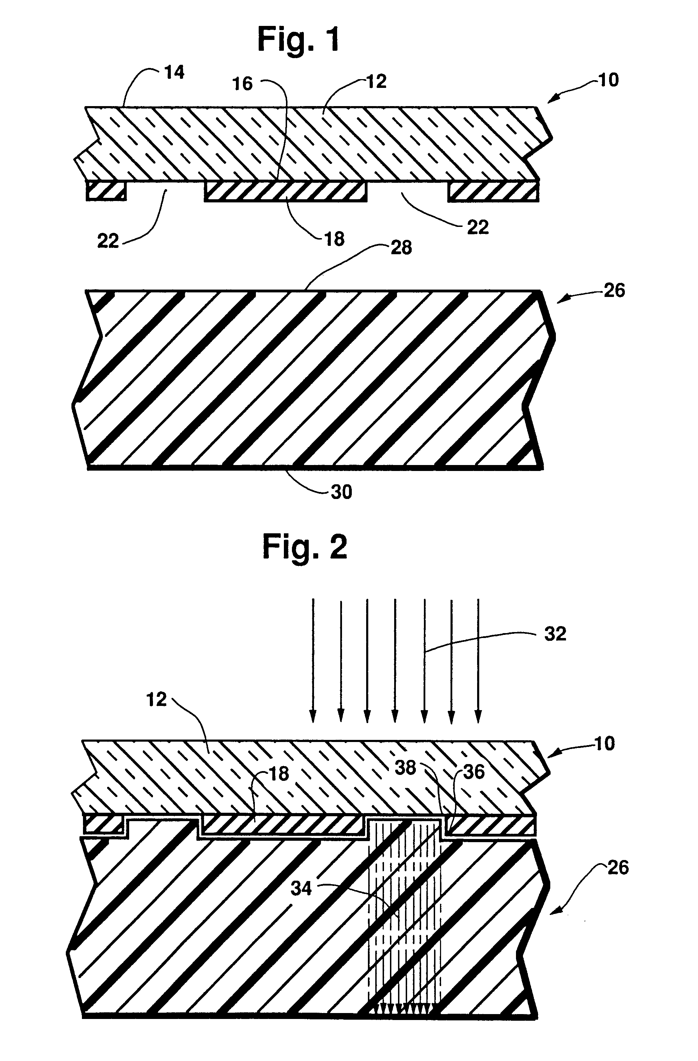

Figure 1 shows a master in the form of a photomask-master 10, comprising a main body 12, transparent to actinic radiation, and more particularly to the wavelength-range of radiation intended to be used in the process of the present invention described below. Examples of suitable materials are glass and silica, depending on the wavelength-range of radiation. The transparent body 12 has an upper surface 14, and a lower surface 16, which are preferably parallel to each other and optically flat. The distance between the two surfaces is not an important factor regarding this invention. A preferable range is between 1 and 10 millimeters, and a more preferable range between 3 and 5 millimeters.

The lower surface 16 is patterned by an opaque material 18, which has a finite thickness. The opaque material 18 is frequently chromium, as this element provides a number of desirable characteristics such as opaqueness, strength, corrosion resistance, and capability of being etched. It should be understood, however, that the nature of the opaque material 18 is not a significant factor in the practice of the present invention, as long as it possesses reasonable properties as a radiation masking material for use in photomasks. The thickness of layer 18 is usually in the range of 70 to 150 nanometers, and preferably 90 to 120 nanometers. As the thickness increases above 150 nanometers, the resolution suffers. When the thickness decreases below 70 nanometers, the integrity, strength and opacity of the film undergo deterioration.

A number of areas 22 are maintained open and uncovered by removing part of the opague layer. In actual practice, when making a photomask, a complete film of an opaque material 18 is preferably deposited on the while surface 16 of the main body 12, and then predetermined portions of the film are removed, usually by selective etching techniques, well known in the art of photomask making. What is etched away produces transparent recessed areas 22, while what remains from the film 18 represents opaque protruding areas on the surface of the mask.

When the optical medium to be reproduced is an optical disc, the recessed transparent areas 22 may have an oblong shape with a constant width, preferably between 350 and 750 nanometers, and more preferably between 450 and 650 nanometers. The plane of the cross-section shown in Figure 1 is along the width. The length of each open oblong area within the opaque protruding areas corresponds to the desirable optical information. These oblong areas are preferably arranged in circular tracks, which in turn have a distance between them of preferably 1 to 2 micrometers, and more preferably of 1.4 to 1.8 micrometers.

Figure 1 also shows a refractive index-modulatory photosensitive dry film 26, which has an upper surface 28 and a lower surface 30. It is important that the thickness of the refractive index-modulatory polymer (the distance between the surfaces 28 and 30) is less than 3 micrometers, preferably between 0.5 and 3 micrometers, and more preferably between 1.5 and 2.5 micrometers.

It is also important that the dry photosensitive polymer film is conformable to the shape of the recessed and protruding areas of the lower surface of the master or photomask 10.

Figure 2 shows the photosensitive dry film 26 pressed on the photomask 10 and conforming to the shape of the protrusions 18 and the recessed areas 22. It also shows a beam of collimated actinic radiation 32 penetrating the holographic film 26 as a substantially straight path 34. Due to the conformance of the photosensitive film, any scattering from radiation scattering sources, such as for example the edge corners 36 and 38 is highly reduced.

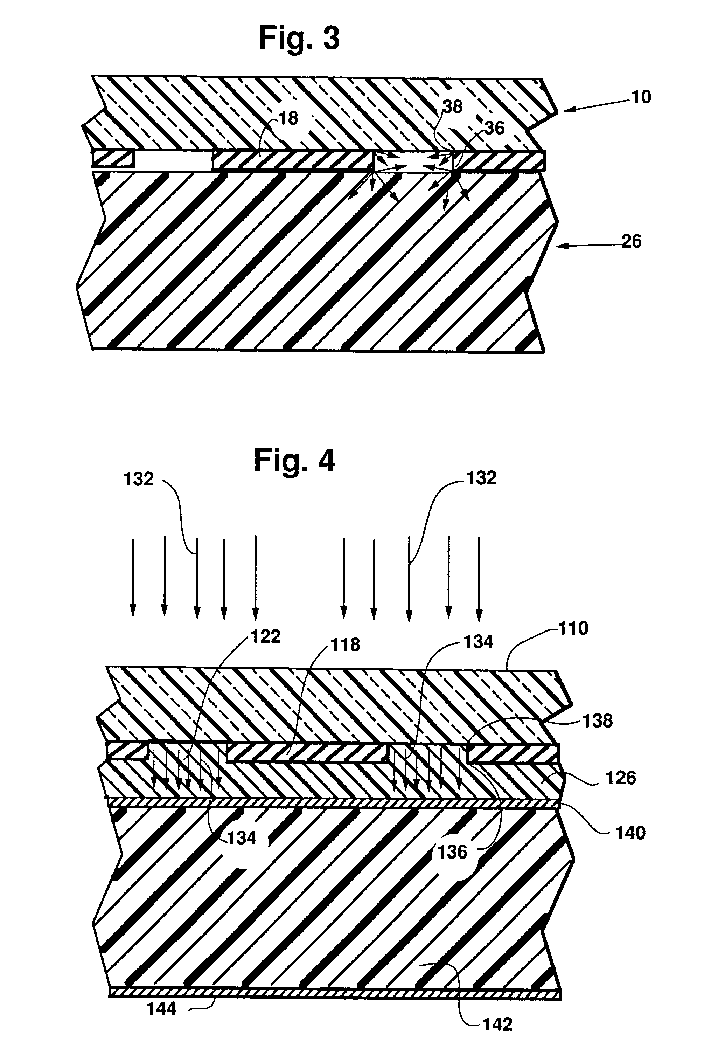

Figure 3, on the other hand, shows an arrangement, where the photosensitive film does not conform to the protruding and recessed areas, and the edge corners 36 and 38 develop excessive scattering, as indicated by the arrows. This is very undesirable because the image resolution deteriorates.

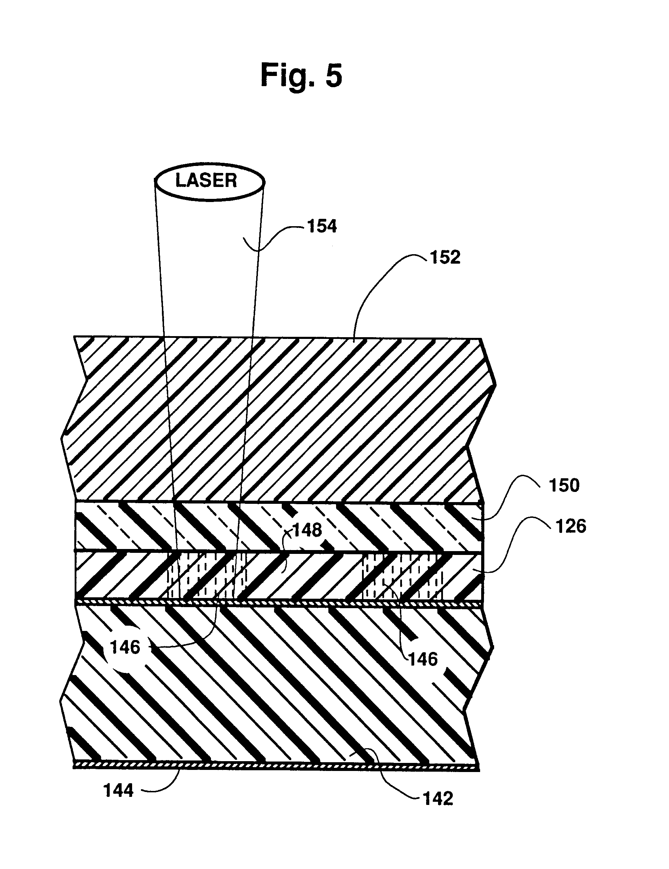

Figures 4 and 5 illustrate steps in a process to form a readable optical medium, such as an optical disc, according to the present invention.

In Figure 4, a protective film 142 has a labeled side 144, while a reflective layer 140 is deposited on the other side. The label 144 is useful to identity the device and also for registration and alignment purposes. The protective layer may be any flexible film, such as for example polyester, polycarbonate, and the like. Its thickness is not critical. Nominally in most applications of this type it is, however, between 50 and 200 micrometers, and preferably between 75 and and 100 mlcrometers. The reflective layer may be a thin metal layer, such as aluminum for example. Its thickness is not critical; a range of 50 -100 nm is preferable.

A photosensitive refractive index-modulatory dry film 126 is applied on top of the reflective layer 140, completing a first substructure of the optical disc. It can be applied by conventional means such as wet coating, curtain coating or spin coating.

In order controllably to record optical information on the photosensitive dry film 126, a photomask-master 110 is brought in contact and pressed on the film 126. The photomask-master has opaque protrusions 118, and precessed transparent areas 122. It is important that the photosensitive dry film is conformable to the shape of these recessed and protruding areas of the photomask-master in order to avoid radiation scattering, especially at corner edges, such as 136 and 138. Collimated actinic radiation 132 can pass through the recessed transparent areas 122 in the form of a straight path 134, and polymerize the monomer at the respective regions of the film.

After this selective exposure, the film is treated to maximize refractive index changes between the irradiated and the non-irradiated areas. A preferable approach involves an additional exposure in a flood manner after removal of the photomask-master. Though it is not known with certainty it is believed that when the monomer contained in the paths 134 is polymerized, new monomer defuses into this path from the surrounding areas. Thus, upon flood exposure, the initially and selectively irradiated portions of the film 126, contain a larger amount of polymerized monomer than the non-irradiated portions. Because the monomer is selected to produce polymers of higher refractive index as compared to that of the binder, the irradiated portions finally assume a higher refractive index than that of the surrounding areas.

It is important that the thickness of the photosensitive dry film is less than 3 micrometers, preferably between 0.5 and 3 micrometers, and more preferably between 1.5 and 1.5 micrometers. This is so to reduce read-out noise. If the thickness is excessively larger than 3 micrometers, the read-out, performed through reflection of collimated radiation from the reflective layer 140, suffers as the length of the optical waveguide, which is actually defined by the straight paths 134, becomes greater than 3 micrometers longer. Alter removal of the photomask regardless of which technique is used to controllably record, the optical information in the form of refractive index changes, the substructure shown in Figure 4 is extended into a complete structure.

Figure 5 depicts an example of a complete structure according to this invention. Alter removal of the master or photomask 100, shown in Figure 4, a transparent adhesive layer 150 (Figure 5) is applied, by lamination for example, on the photopatterned layer 126, in which the already irradiated portions 146 have a different refractive index than the non-irradiated potions 148. The thickness of the optical adhesive layer is not critical. A preferably range is between 1 and 25 micrometers, more preferable 2 and 12 micrometers, and even more preferably between 7 and 9 micrometers.

On top of the adhesive layer 150, a defocusing layer or substrate 152 is applied, also preferably by lamination to complete the structure. The substrate 152 should be transparent. It is preferably considerably thicker than any other layer of the structure. Thicknesses between 0.5 and 5 mm are preferably, between 1 and 2 mm more preferably, and between 1 and 1.5 mm even more preferable. Important functions of the substrate 152, among others, are to provide rigidity along with reasonable flexibility to the total structure, and to defocus any particles, such as dust, with respect to the information areas on the photopolymer layer 126, during readout with optical means, such as a laser beam 154.

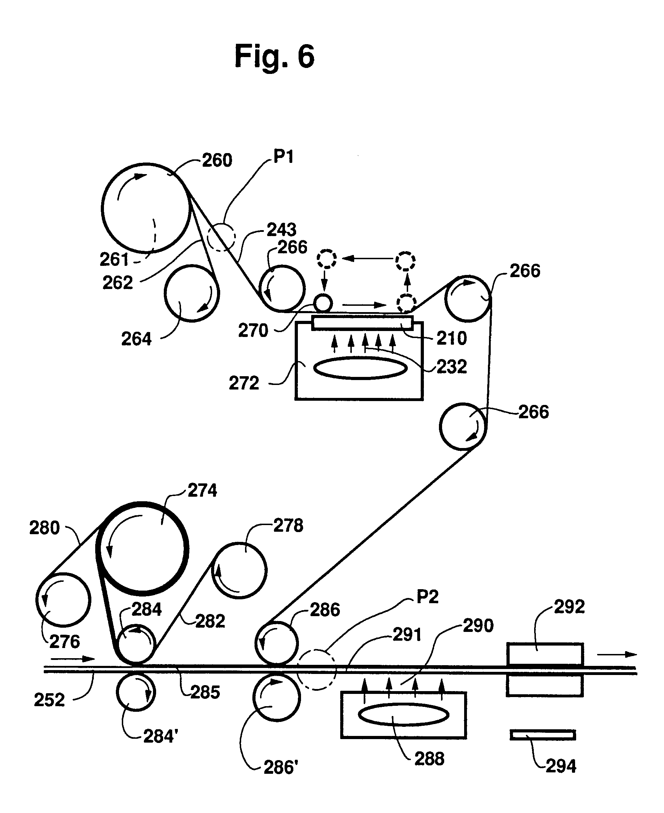

Figure 6 illustrates, as an example, an apparatus for making compact discs efficiently and inexpensively, the description and operation of which are described below.

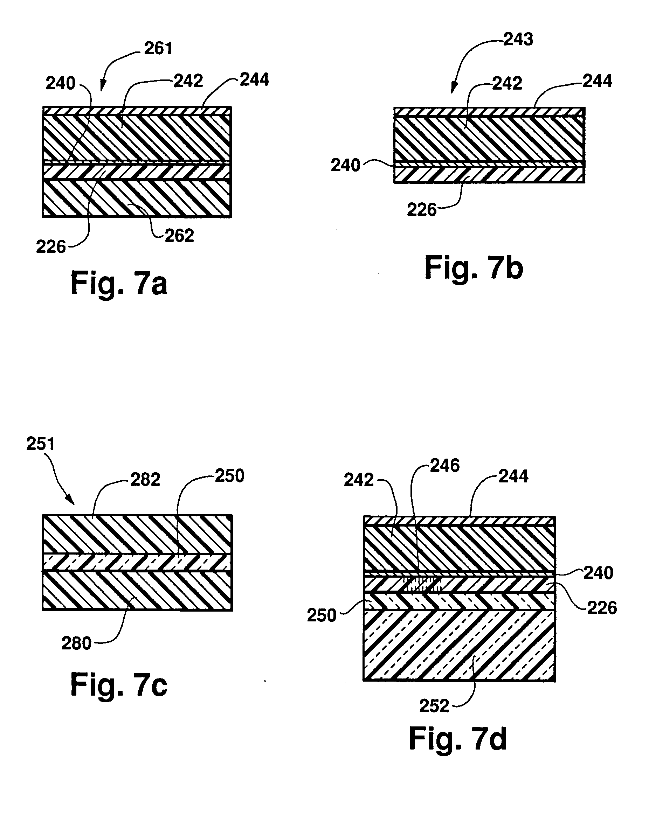

There is provided a roll 260 for holding a multilayer film 261 as shown in detail in Figure 7A. The multilayer film 261 comprises a protective film 242, which has a labeled side 244, and a reflective layer 240 deposited on the other side. The label 244 is useful for identification, registration and alignment purposes. A refractive index-modulatory dry film 226 is sandwiched between the reflective layer and a temporary support film 262. The characteristics of layers 226, 240, 242, and 244 are similar to those of layers 126, 140, 142, and 144, respectively, as described earlier, and illustrated in Figure 4. As the film 261 unwinds from roll 260, the temporary support 262 is separated from the rest, and it is wound on roll 264. The remaining structure 243, illustrated in detail in Figure 7B at a position P1, passed around guiding rolls 266. It also passes over a photomask-master 210, where it is aligned optically and then it is pressed onto the photomask-master 210 by a roller 270, which roller follows a path shown by the adjacent arrows. After the pressing step is completed, the relation of the photomask-master with regard to film substructure 243 is shown in Figure 4 in an upside down position. Numerals differing by multiples of 100 represent substantially identical elements.

The film is then imagewise exposed to collimated actinic radiation 232 from a suitable UV lamp 272 according to the desired optical disc information, and it follows its path towards a pair of nip-rolls 286 and 286', where it is laminated with another substructure 285. Substructure 285 is also the product of lamination of a transparent substrate 252 similar to substrate 152 illustrated in Figure 5, with an adhesive film 250 similar to film 150, also illustrated in Figure 5. The adhesive film 250 is initially wound in a roll 274 in a sandwiched form 251 between protective films 280 and 282, as shown in Figure 6C. As the sandwiched form 251 follows a path towards a second pair of nip-rolls 284 and 284', the protective film 280 separates and is wound on roll 276. The freed surface of the adhesive 250 is then laminated on the transparent substrate 252 by nip-rolls 284 and 284'. At this point the remaining protective film 282 is separated and is wound on roll 278. The laminate 285 thusly produced proceeds further to be laminated with the exposed film 243 by nip-rolls 286 and 286', as aforementioned. The new laminate 291 at position P2 is illustrated in Figure 6. The new laminate 291 is flood exposed by actinic radiation 290, provided by a suitable lamp 288, wherein he optical image of different refraction indices, produced earlier, is now fixed. In turn, laminate 291 is punched at a punch station 292, so that optical compact discs 294 are produced.

The invention is illustrated by and will be better understood by reference to the following examples:

## EXAMPLE

### Example 1

This example illustrates the preparation of a reflective optical element, wherein the optical element is an optical disk. Such optical disc was fabricated from two consumable parts: pre-formed disc substrate having a pre-laminated dry photopolymer adhesive layer, and a metallized plastic film substrate carrying optical digital information recorded on its reflective side by a photolithographic exposure as a change in refractive index in a pre-coated dry photopolymer layer.

The disc substrate, which serves as a dust-defocusing layer and provides mechanical support, was a 1.2 mm thick, 120 mm in diameter injection molded polycarbonate disk with a 15 mm cylindrical center hole. The adhesive layer was applied to the substrate in the form of a dry film by hot roll lamination. A dry film photopolymer element was prepared by machine coating the photopolymerizable composition described below onto 12.7 micrometer polyethylene terephthalate film: a 25.4 micrometer polyethylene film was used as an interleaf. The dried photopolymerizable adhesive layer was 8.0 micrometers thick.

The composition of the dry photopolymer adhesive layer was as follows:

Table 1

| Ingredient | Amount (g) |
| --- | --- |
| Elvacite® 2051 | 32.40 |
| Vinac® B-15 | 12.64 |
| TMPTMA | 35.55 |
| TEOTA | 7.90 |
| o-Cl-HABI | 1.58 |
| 2-Mercaptobenzoxazole | 0.71 |
| Tinopal® PCR | 0.20 |
| Tinopal® SFG | 0.99 |
| Cyasorb® UV-24 | 0.08 |
| Brij® 30 | 7.90 |
| Hydroquinone | 0.05 |
| TAOBN | 0.03 |

To support the disc during lamination, it is placed on a temporary carrier sheet of commercial color proofing receptor (CROMALIN® Masterproof Commercial Receptor, Product No. CM/CR, E. I. du Pont de Nemours and Company, Inc., Wilmington, DE). The dry film is laminated to the substrate using a CROMALIN® laminator (Du Pont, Wilmington, DE) operating at a roll surface temperature of 115-124C. Lamination covers the disc surface uniformly and seals it around the edges to the carrier sheet; the disc is cut out with a razor blade and the laminated film cut away from the center hole.

The reflective film substrate carrying digital optical information was 127 micrometers thick commercial aluminized Mylar® film with a 1.5-2.0 micrometers thick dry photopolymer layer pre-spincoated to the reflective side of the Mylar® film.

The composition of the dry photopolymer layer was as follows:

Table 2

| Ingredient | Amount (g) |
| --- | --- |
| Vinac® B-15 | 4.80 |
| Vinac® B-100 | 7.20 |
| N-Vinylcarbazole | 1.70 |
| Photomer 4039 | 4.40 |
| Brij® 30 | 1.40 |
| MMT | 0.30 |
| o-Cl-HABI | 0.20 |
| Toluene | 20.00 |
| Methyl Ethyl Ketone | 60.00 |

### Lamination of the Adhesive Layer to the Disc Substrate

To support the disc during lamination, it is placed on a temporary carrier sheet of commercial color proofing receptor (CROMALIN® Masterproof Commercial Receptor, Product No. CM/CR, E. I. du Pont de Nemours and Company, Inc., Wilmington, DE). The dry film is laminated to the substrate using a CROMALIN® laminator (Du Pont, Wilmington, DE) operating at a roll surface temperature of 115-124C. Lamination covers the disc surface uniformly and seals it around the edges to the carrier sheet; the disc is cut out with a razor blade and the laminated film cut away from the center hole.

### Coating of the Photopolymer Layer onto the Metallized Film

In this example, a solution of the described photopolymer formulation was spin-coated onto the aluminized side of the 127 micrometers thick commercial Mylar® film by use of the commercial Photo-Resist Spinner Model 1-EC101D-CB15 (Headway Research, Inc., Garland, Texas). Spin-coating parameter: speed - 4500 rpm, time - 60 sec (includes drying period for the photopolymer film). Thickness of the dried photopolymer layer was 1.5-2.0 micrometers. Spin coating and drying was performed in the Argon atmosphere.

### Photolithographic Recording of the Optical Disc

Optical digital information was recorded as a change in refractive index in the pre-coated dry PHOTOPOLYMER layer by UV photolithographic exposure using a chromium Master-Photomask with conventional recorded optical digital information as a photolithographic tool.

Metallized Mylar® film with pre-coated and dried HPP layer was laminated manually using a photographic roller to the said Master-Photomask with photopolymer layer facing chromium surface of the photomask. Due to the substantial tackiness of the photopolymer layer good lamination quality was obtained. Laminated film-mask was placed in Argon filled chamber approximately 20 cm (8 in.) from the UV source in a high intensity UV exposure unit (5 kW Variable Intensity OLITE Printing Light, model AL53-M, Olec Corp., Irvine, CA). After 6.0 sec exposure of UV light intensity set to 900 W (60 mJ/cm$^2$) metallized Mylar® film with photoimaged photopolymer layer was delaminated from the photomask and photopolymer layer was overexposed for another 15 sec at UV light intensity set to 5000 W (320 mg/cm$^2$) while still being in the Argon atmosphere. Good quality image of the Master-Photomask was recorded as a change in refractive index in the photopolymer layer. Radial and tangential change in refractive index of 0.057 and 0.074 respectively was measured with He-Ne laser source at 633 nm and 0.051 and 0.069 respectively was measured with IR laser source at 860 nm.

### Assembling of the Photoimaged Optical Disc

Imaged and fixed photopolymer layer was concentrically aligned on the polycarbonate disc substrate facing pre-coated Adhesive layer and sandwich was made by pressing metallized Mylar® film with imaged photopolymer layer into Adhesive layer of the polycarbonate disc substrate with pressure rolls. Laminated sandwich was subjected to additional UV exposure in the mentioned above unit for 10 sec at UV light intensity set to 5000 W (320 mg/cm$^2$) to complete procedure for making reflective optically readable media

EP 0 509 472 A2

such as optical disc.

GLOSSARY

| | | |
|---|---|---|
| Brij® 30 | Brij® is a registered trademark of ICI for polyoxyethylene (4) lauryl ether | |
| Cyasorb® UV-24 | 2-Cyasorb is a registered trademark of American Cyanamid Co., Wayne, NJ for 2-hydroxy-4-methoxyphenyl | |
| Elvacite® 2051 | Elvacite is registered trademark of E. I. du Pont de Nemours and Co., Wilmington, DE for poly(methyl methacrylate) MW = 350,000 | |
| MMT | 4-methyl-4H-1,2,4-triazole-3-thiol | |
| o-Cl-HABI | 1,1'-Biimidazole, 2,2'-bis[o-chlorophenyl] 4,4',5,5'-tetraphenyl- | |
| Photomer 4039 | Phenol ethoxylate monoacrylate | |
| TAOBN | 1,4,4-Trimethyl-2,3-diazobicyclo-(3.2.2)-non-2-ene-2,3-dioxide | |
| Photomer 4039 | Phenol ethoxylate monoacrylate | |
| TEOTA | Triacrylate ester of ethoxylated trimethylolpropane | |
| Tinopal® PCR | Tinopal is a registered trademark of Ciba-Geigy Corporation, Hawthorne, NY for 2-(Stibyl-4'')-(naphtho-1',2',4,5)-1,2,3-triazol-2''-sulfonic acid phenyl ester; benzensulfonic acid, 5-(2H-naphtho<1,2-D>-trizole-2-ly)-2-(2-phenylethyl)-, phenyl ester | |
| Tinopal® SFG | 3-Phenyl-7-[2'-[4'-N,N-diethylamino-6'-chloro-1',3',5-triazinylamino]-coumarin; Ciba-Geigy | |
| Vinac® B-15 | Vinac is a registered trademark of Air Products and Chemicals Corp., Allentown, PA for poly(vinyl acetate) MW = 90,000 | |

**Claims**

1. A method for making read-only optical recording media comprising the steps of:
   (1) Forming a reflective layer on a surface of a protective support film;
   (2) Laminating a refractive index-modulatory photosensitive dry film to the reflective layer side of the protective support film;
   (3) Contacting the surface of the photosensitive dry film with a relief image photomask-master having recessed and protruding areas which contrast in opacity and transparency and represent optically readable information, thereby conforming the exposed surface of the photosensitive dry film in conformation with the surface of the relief image photomask-master;
   (4) Passing actinic radiation through the transparent areas of the photomask-master thereby hardening and effecting a change of at least 0.01 in the refractive index of the exposed areas of the photosensitive dry film;
   (5) Removing the photomask-master from the conforming surface of the photosensitive dry film;
   (6) Flood exposing the photosensitive dry film with actinic radiation to effect hardening of the previously unexposed areas thereof;
   (7) Applying a layer of photohardenable optical adhesive to either the surface of the photohardened dry film or a dimensionally stable transparent substrate;
   (8) Laminating the available surface of the photohardened dry film to the substrate with the optical adhesive sandwiched between the layers; and
   (9) Curing the optical adhesive.

2. A method for making a read-only optical recording media comprising the steps of:
   (1) Laminating a refractive index-modulatory photosensitive dry film to a dimensionally stable transparent substrate;
   (2) Contacting the surface of the photosensitive dry film with a relief image photomask-master having recessed and protruding areas which contrast in opacity and transparency and represent optically readable information, thereby conforming the exposed surface of the photosensitive dry film in conformation with the surface of the relief image photomask-master;
   (3) Passing actinic radiation through the transparent areas of the photomask thereby hardening and effecting a change of at least 0.01 in the refractive index of the exposed areas of the photosensitive dry film;
   (4) Removing the photomask from the surface of the imaged photosensitive dry film;
   (5) Flood exposing the photosensitive dry film with actinic radiation to effect hardening of the previously unexposed areas thereof;

12

(6) Forming a reflective layer on the surface of the imaged photohardened dry film; and

(7) Applying a layer of curable adhesive to either the reflective layer or to a surface of a protective support film;

(8) Laminating the reflective layer to the protective support film with the curable adhesive sandwiched between the layers; and

(9) Curing the adhesive.

3. The method of either claim 1 or claim 2 in which the thickness of the refractive index - modulatory photosensitive dry film is 0.5-3 micrometers.

4. The method of either claim 1 or claim 2 in which the refractive index of the photosensitive dry film is raised.

5. The method of either claim 1 or claim 2 in which the optical recording media are in the form of discs.

# Fig. 1

# Fig. 2

# Fig. 3

# Fig. 4

# Fig. 5

# Fig. 6

**Fig. 7a**

**Fig. 7b**

**Fig. 7c**

**Fig. 7d**